# EUROPÄISCHE PATENTSCHRIFT

(11) **EP 0 433 641 B1**
(45) Veröffentlichungstag und Bekanntmachung des Hinweises auf die Patenterteilung: **10.04.1996**
(21) Anmeldenummer: 90121394.2
(22) Anmeldetag: 08.11.1990
(51) Int. Cl.: G05D 9/12, G01F 23/00

(54) **Vorrichtung zur Steuerung des Flüssigkeitszulaufs zu einem Behälter**
Device for controlling the flow of fluid to a container
Dispositif de commande de l'écoulement de fluide vers un réservoir

(30) Priorität: 20.12.1989 DE 3942168
(43) Veröffentlichungstag der Anmeldung: 26.06.1991
(73) Patentinhaber: Bosch-Siemens Hausgeräte GmbH, D-81669 München (DE)
(72) Erfinder: Jerg, Helmut, Dipl.-Ing. (FH), W-7928 Giengen (DE); Fetzer, Gerhard, Dipl.-Ing. (FH), W-8883 Gundelfingen (DE)

(56) Entgegenhaltungen:
- DE-A- 2 258 634
- DE-A- 2 416 834
- DE-A- 3 003 440
- DE-C- 3 807 996

## Beschreibung

Die Erfindung betrifft eine Vorrichtung zur Steuerung des Zulaufs zu einem Behälter, wobei der Behälter eine ein Füllniveau begrenzende Überlaufkante aufweist, die zu einem Überlaufkanal führt, an dem eine auf einen außerhalb des Überlaufkanals angeordneten Schalter wirkende Membrane angeordnet ist und mit einem Zulaufventil, das durch einen Steuerimpuls öffenbar und durch einen Steuerimpuls des Schalters schließbar ist.

Aus der DE-OS 24 16 834 ist eine Vorrichtung der vorgenannten Art bekannt, bei der am Ende eines Überlaufkanals eine Durckdose mit Membrane und elektrischem Schalter angeordnet ist, wobei bei Auslenken der Membrane der Schalter ein Zulaufventil schließt. Die Druckdose ist mit einem manuell zu öffnenden Ablaufhahn ausgestattet.

Vorrichtungen zur Steuerung des Flüssigkeitszulaufs zu einem Behälter der vorgenannten Art werden z.B. in flüssigkeitführenden Haushaltmaschinen, insbesondere wasserführenden Haushaltsmaschinen, wie z.B. Geschirrspülmaschinen verwendet. Bei derartigen Geräten geht der Benutzer davon aus, daß außer dem Einfüllen des zu reinigenden Geschirrs, dem Einfüllen von Reiniger und Klarspüler sowie dem periodischen Einfüllen von Salz für die Regenerierung des Ionenaustauschers keine weiteren geräteabhängigen Tätigkeiten notwendig werden. Die vorgenannte Vorrichtung zur Steuerung des Flüssigkeitszulaufs zu einem Behälter ist bei derartigen Geräten im Gehäuse eingebaut und für den Benutzer üblicherweise unzugänglich. Für einen manuell zu öffnenden Ablaufhahn zum Entleeren des Überlaufes ist eine zusätzliche Öffnung in dem Gehäuse notwendig, deren Einbau aufwendig ist. Weiterhin müßte dem Benutzer ein Anzeige zur Verfügung stehen, die anzeigt, daß der Überlaufkanal zu entleeren ist. Wird der Überlaufkanal nämlich nicht entleert, so wird der Wasserzulauf des Behälters aufgrund des Schließbefehles des Schalters unterhalb der Membrane der Druckdose nicht eingeleitet und das Gerät ist nicht arbeitsbereit.

Ferner verdunstet das Wasser in dem ständig mit wechselnden Niveaus gefülltem Überlaufkanal und verursacht die Gefahr des Verkalkens, was zu einer Funktionsbeeinträchtigung der Steuerungsvorrichtung führen kann.

Der Erfindung liegt die Aufgabe zugrunde, bei einer einfach aufgebauten Anordnung der eingangs genannten Art eine sichere und ständige Funktion der Steuervorrichtung zu gewährleisten und die Gefahr des Verkalkens zu vermeiden.

Diese Aufgabe wird erfindungsgemäß dadurch gelöst, daß der Überlaufkanal ständig entleert wird, wobei in Strömungsrichtung nach der im Abstand von der Überlaufkante angebrachten Membrane ein Strömungswiderstand angeordnet ist, der als Auslaufkanal, in den der Überlaufkanal mündet und dessen Querschnitt kleiner als der Querschnitt des Überlaufkanals ist, ausgebildet ist. Durch eine geregelte Entleerung des Überlaufkanales ist der Benutzer von der Verpflichtung entbunden, den Wasserstand in dem Überlaufkanal zu überwachen. Eine entsprechende Anzeigevorrichtung und einen Zugang zu der Steuerungsvorrichtung am Gerät kann entfallen. Die Gefahr einer Verkalkung des Überlaufes durch Verdunstung ist vermieden. Mit der Anordnung der Membrane in einem Abstand von der Überlaufkante wird gewährleistet, daß in dem Überlaufkanal zumindestens beim Zeitpunkt des Schaltvorganges eine ausreichend hohe Flüssigkeitssäule entsteht, die das Auslenken der Membrane und damit das Schalten des Schalters verursachen kann. Bei dem ständig entleerbaren Überlaufkanal besteht die Gefahr, daß sich aufgrund der ständig auslaufenden Flüssigkeit aus dem Überlaufkanal nicht die notwendige Flüssigkeitssäule bilden kann, die die Auslenkung der Membrane verursachen kann. Diese Gefahr ist durch die Anordnung eines Strömungswiderstandes nach der Membrane vermieden. Mit der Ausführung des Strömungswiderstandes als Auslaufkanal mit kleinerem Querschnitt als dem Querschnitt des Überlaufkanales ist der Aufbau einer ausreichenden Flüssigkeitssäule mit einer zweckmäßigen Maßnahme gewährleistet.

Nach einem weiteren Merkmal der Erfindung wird die Membrane quer zur Einströmrichtung beaufschlagt. Damit wird die Anbringung der Membrane erleichtert.

Erfindungsgemäß wird die Membrane direkt von der einströmenden Flüssigkeit oder durch ein zwischen der einströmenden Flüssigkeit und ihr eingeschlossenes Luftpolster beaufschlagt. Je nach Anordnung der Membrane ist es mit der vorliegenden Erfindung möglich, die einströmende Flüssigkeit direkt auf die Membrane wirken zu lassen oder über ein eingeschlossenes Luftpolster, wobei das eingeschlossene Luftpolster den zusätzlichen Vorteil aufweist, daß die Verkalkungsgefahr an der Membrane noch weiter eingeschränkt wird.

Vorteilhafterweise wirkt die Membrane direkt oder mittels eines Übertragungsgliedes auf den Schalter. Damit ist je nach Anwendungsfall und Einbaulage des Schalters immer eine Möglichkeit gegeben, die Auslenkung der Membrane auf den Schalter zu übertragen.

Nach einer bevorzugten Ausführungsform der Erfindung ist die Membrane mittels eines Deckels zwischen diesem und der Wand des Überlaufkanals an ihrem umlaufenden Rand verklemmt. Damit wird die Möglichkeit des einfachen Einbaues und des einfachen Austausches der Membrane gewährleistet.

Die einfache Montage und das einfache Auswechseln der Membrane und des Deckels wird nach einem weiteren Merkmal der Erfindung dadurch weiter erleichtert, daß der Deckel mittels Rasthaken mit der Wand lösbar verbunden ist.

Vorteilhafterweise greifen die Rasthaken in entsprechende Öffnungen ein und hintergreifen diese federnd.

Zweckmäßigerweise sind die Rasthaken an der Wand und die Öffnungen an dem Deckel angeordnet.

Eine einfache Fertigungsmöglichkeit ergibt sich dadurch, daß die Rasthaken einstükkig an der Wand angeformt sind.

Zusätzliche Dichtungselemente werden durch ein weiteres Merkmal der Erfindung dadurch eingespart, daß die Membrane die Öffnung in der Wand des Behälters radial abdichtet.

Vorteilhafterweise wird diese Abdichtung dadurch erzielt, daß der umlaufende Rand in einem radial Wand verlaufenden Teil zwischen einem vorragenden Rand des Dekkels und der Öffnung in der Wand angeordnet ist.

Zweckmäßigerweise weist der Deckel Führungen für das Übertragungsglied auf.

Vorteilhafterweise wird das Übertragungsglied in den Deckel dadurch geführt, daß das Übertragungsglied eine äußere Führung und eine zentrische Führung aufweist, wobei zweckmäßigerweise die äußere Führung eine mit einer äußeren Führung des Deckels zusammenwirkende umlaufende Fläche und die zentrische Führung ein in einer zentrischen Bohrung im Deckel geführter Zentrierstift ist.

Zur Erleichterung der Montage ist vorteilhaft, daß der Zentrierstift in eine zentrische Bohrung der Stirnfläche des Übertragungsgliedes formschlüssig aufgenommen ist.

Anhand der Zeichnung werden Ausführungsbeispiele der erfindungsgemäßen Vorrichtung näher erläutert. Es zeigt:
- Fig. 1: in schematischer Darstellung eine Vorrichtung zur Steuerung des Flüssigkeitszulaufes zu einem Behälter mit einem ständig entleerten überlaufkanal und mit einer seitlich an der Außenwand des Überlaufkanals angeordneten Membrane,
- Fig. 2: in schematischer Darstellung eine Vorrichtung zur Steuerung des Flüssigkeitszulaufs zu einem Behälter entsprechend Fig. 1 mit einer seitlich an der Innenwand des Überlaufkanals angeordneten Membrane,
- Fig. 3: in schematischer Darstellung eine Vorrichtung zur Steuerung des Flüssigkeitszulaufs zu einem Behälter entsprechend Fig. 1 mit einer unterhalb des Behälterbodens an der Außenwand des Überlaufkanals angeordneten Membrane,
- Fig. 4: in schematischer Darstellung eine Vorrichtung zur Steuerung des Flüssigkeitszulaufes zu einem Behälter nach Fig. 1 mit einer unterhalb des Behälterbodens an der Innenwand des Überlaufkanals angeordneten Membrane,
- Fig. 5: in schematischer Darstellung eine Vorrichtung zur Steuerung des Flüssigkeitszulaufs zu einem Behälter entsprechend Fig. 4 mit einem zusätzlichen Luftpolster,
- Fig. 6: in schematischer Darstellung eine Vorrichtung zur Steuerung des Flüssigkeitszulaufs zu einem Behälter entsprechend Fig. 4 mit einer neben dem Überlaufkanal außerhalb des Behälters angeordneten Membrane,
- Fig. 7: in schematischer Darstellung eine Vorrichtung zur Steuerung des Flüssigkeitszulaufs zu einem Behälter entsprechend Fig. 6 mit einem zusätzlichen Luftpolster unterhalb der Membrane und
- Fig. 8: einen Schnitt durch eine Ausführungsbeispiel einer Anordnung entsprechend Fig 1.

Ein Behälter 10 wird über ein Zulaufventil 1 mit Flüssigkeit gefüllt. Der Flüssigkeitszulauf wird dadurch gesteuert, daß das Zulaufventil 1 durch einen Steuerimpuls öffenbar, z.B. durch das schematisch dargestellte Programmsteuergerät 6 eines wasserführenden Haushaltgerätes, und durch einen Steuerimpuls eines Schalters 4, der auf den Flüssigkeitsstand im Behälter 10 reagiert, (z.B. über das Programmsteuergerät 6) schließbar ist. Der Behälter 10 weist eine ein Füllniveau 2 begrenzende Überlaufkante 11 auf, von der über sie hinwegströmende Flüssigkeit zu einem Überlaufkanal 12 gelangt. Zweckmäßigerweise ist der überlaufkanal 12 an dem Behälter 10 so angeordnet, daß eine der Seitenwände des Behälters 10 die Innenwand des Überlaufkanals 12 bildet. In einer Wand 15 des Überlaufkanals 12 ist eine Öffnung 16 vorgesehen, in die eine Membrane 20 eingesetzt ist. Die Membrane 20 wirkt auf den außerhalb des Überlaufkanals 12 angeordneten Schalter 4 ein, wenn in dem Überlaufkanal 12 ein ausreichend hoher Druck zum Auslenken der Membrane 20 herrscht. Durch das Einwirken der Membrane 20 auf den Schalter 4 gibt der Schalter 4 den Schließimpuls an das Zulaufventil 1, das damit den Flüssigkeitszulauf zu dem Behälter 10 beendet.

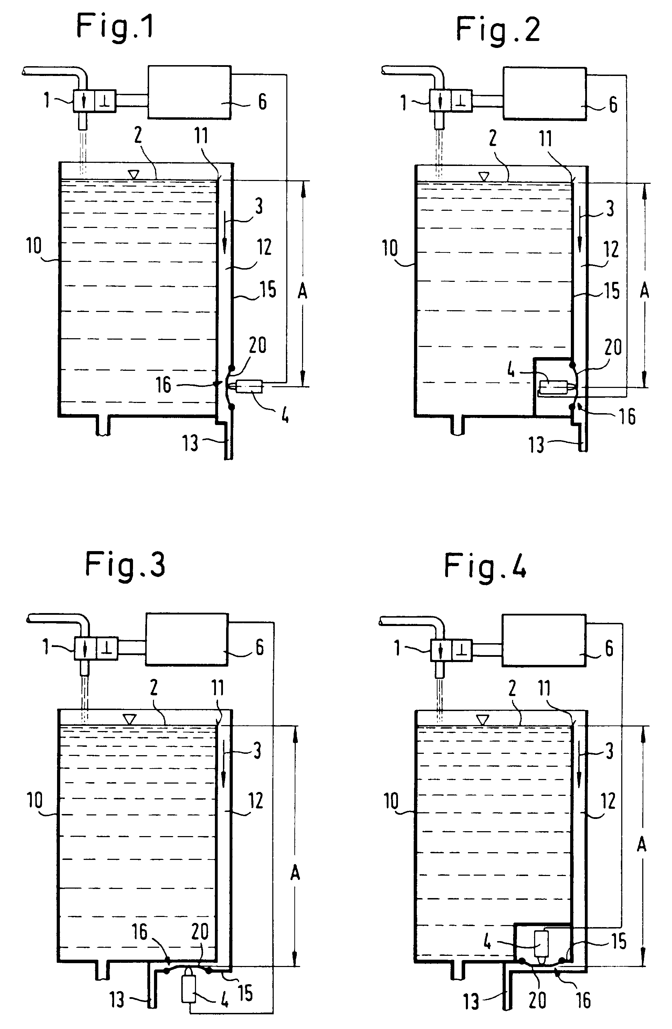

In den Fig. 1 bis 7 sind schematisch verschiedene Ausführungsformen eines erfindungsgemäß ständig entleerbaren Überlaufkanales 12 gezeigt, die sich nur durch den Anbringungsort der Membrane 20 unterscheiden. Den Ausführungsformen der Fig. 1 bis 7 ist gemeinsam, daß der Anbringungsort der Membrane 20 in einem Abstand A unterhalb der Überlaufkante 11 des Behälters 10, bzw. des maximalen Füllniveaus 2 des Behälters 10, angeordnet ist und daß ein als Strömungswiderstand ausgebildeter Auslaufkanale 13, dessen Querschnitt kleiner als der Querschnitt des Überlaufkanales 12 ist, in Strömungsrichtung 3 nach der Membrane 20 angeordnet ist.

Bei den mit einem durch den Auslaufkanal 13 mit einem ständig entleerbaren Überlaufkanal 12 ausgestatteten erfindungsgemäßen Vorrichtungen zur Steuerung des Flüssigkeitszulaufes zu dem Behälter 10 wird aufgrund des kleineren Querschnittes des Auslaufkanales 13 gegenüber dem Überlaufkanal 12 in dem Überlaufkanal nach Einströmen der über die Überlaufkante 11 in Strömungsrichtung 3 fließenden Flüssigkeit eine Flüssigkeitssäule aufgebaut, die so hoch wird, daß die Membrane 20 ausgelenkt wird und damit auf den Schalter 4 einwirken kann. Die maximale Höhe der Flüssigkeitssäule ist der Abstand A, der nicht geringer sein darf als die Mindesthöhe der zur Auslenkung der Membrane 20 benötigten Flüssigkeitssäule. Nach Schließen des Zulaufventils 1 durch den Impuls des Schalters 4 wird die Flüssigkeitssäule durch Abfließen aus dem Auslaufkanal 13 abgebaut, da über die Überlaufkante 11 weitere Flüssigkeit in den Überlaufkanal nicht mehr einströmt. Zur besseren Übersicht ist als Abstand A bei Fig. 1, 2 und 8 der Abstand der Mittellinie der Membrane 20 zu der Überlaufkante 11 angegeben. Der Schalter 4 ist mit seinem Betätigungsglied zweckmäßigerweise auf der Mittellinie der Membrane 20 angeordnet.

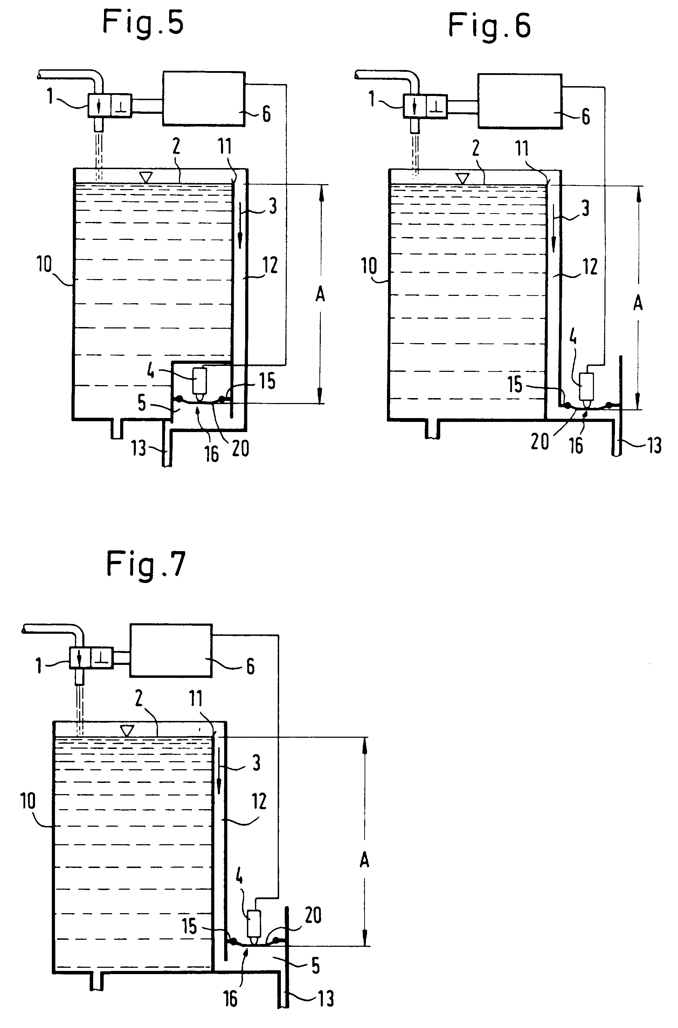

In den Ausführungsformen nach Fig. 1, 2, 3, 4 und 6 wird die Membrane 20 von der einströmenden Flüssigkeit direkt, und zwar quer zur Strömungsrichtung 3 beaufschlagt. In Fig. 5 und 7 sind Ausführungsformen der Erfindung gezeigt, in der die Membrane 20 durch ein zwischen der einströmenden Flüssigkeit und der Membrane 20 eingeschlossenes Luftpolster 5 ebenfalls quer zur Strömungsrichtung 3 beaufschlagt wird.

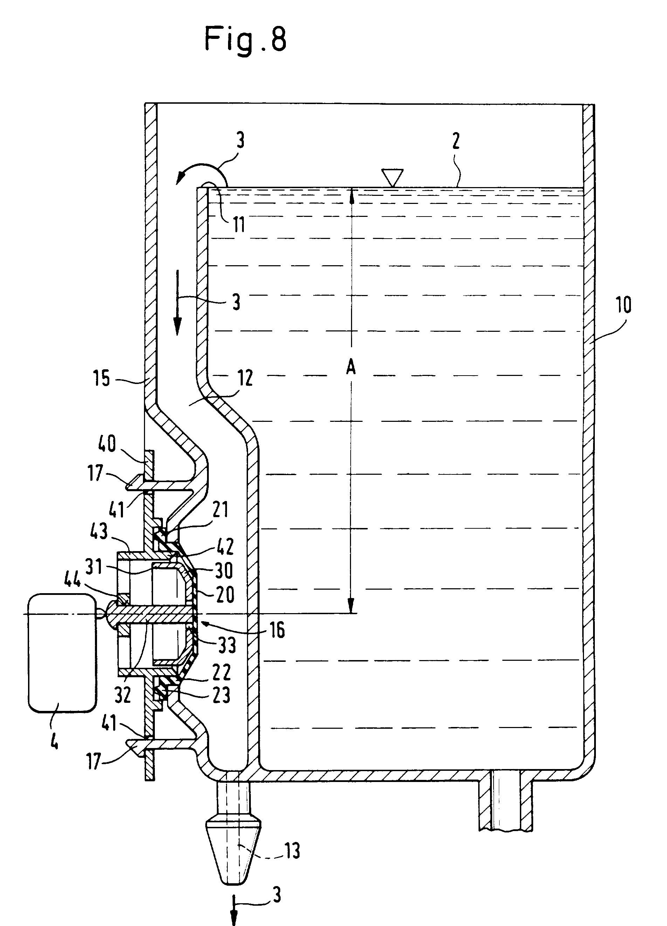

Fig. 8 zeigt ein Ausführungsbeispiel für die Anordnung der Vorrichtung entsprechend Fig. 1. Die wesentlichen Bestandteile der Vorrichtung zur Steuerung des Flüssigkeitszulaufs zu dem Behälter 10 sind zu den schematischen Darstellung schon erwähnt und mit dem gleichen Bezugszeichen ausgestattet. Im folgenden wird nur noch auf die Befestigung der Membrane 20 Bezug genommen.

An der Wand 15 des Überlaufkanals 12 ist die Membrane 20 in einer Öffnung 16 der Wand 15 angeordnet. Die Membrane 20 ist mittels eines Deckels 40 zwischen diesem und der Wand 15 dadurch an ihrem umlaufenden Rand 21 mit einem parallel zur Wand 15 verlaufenden Teil 23 verklemmt und lösbar verbunden, daß an der Wand 15 einstückig angeformte Rasthaken 17 durch Öffnungen 41 des Deckels 40 eingreifen und diese federnd hintergreifen. Die Membrane 20 dichtet die Öffnung 16 in der Wand 15 dadurch radial ab, daß der umlaufende Rand 21 in einem radial verlaufenden Teil 22 zwischen einem vorragenden Rand 42 des Deckels 40 und der Öffnung 16 der Wand 15 angeordnet ist. Mit dieser Anordnung ist eine zusätzliche Abdichtung der Öffnung 16 überflüssig.

Bei dem in Fig. 8 gezeigten Ausführungsbeispiel wirkt die Membrane 20 mittels eines Übertragungsgliedes 30 auf den Schalter 4 ein. Der Deckel 40 weist Führungen 43, 44 für das Übertragungsglied 30 auf. Das Übertragungsglied 30 hat eine äußere Führung 31, die als mit der äußeren Führung 43 des Deckels 40 zusammenwirkende umlaufende Fläche ausgebildet ist und eine zentrische Führung 32, die als ein in einer zentrischen Bohrung 44 des Deckels 40 geführter Zentrierstift ausgeführt ist. Der Zentrierstift ist in einer zentrischen Bohrung 33 in der Stirnfläche des Übertragungsgliedes 30 formschlüssig aufgenommen.

Damit ist eine einfache, absolut dichte, einfach auswechselbare und leicht montierbare Befestigung für die Membrane geschaffen worden.

Mit den vorgeschriebenen Ausführungsformen der Erfindung ist durch die Entleerbarkeit des Überlaufkanales eine ohne manuelle Einwirkung von außen ständig funktionsbereite Vorrichtung zur Steuerung des Flüssigkeitszulaufes zu einem Behälter geschaffen worden, in der eine Verkalkungsgefahr vermieden ist.

## Patentansprüche

1. Vorrichtung zur Steuerung des Flüssigkeitszulaufs zu einem Behälter, wobei der Behälter eine ein Füllniveau begrenzende Überlaufkante aufweist, die zu einem Überlaufkanal führt, an dem eine auf einen außerhalb des Überlaufkanals angeordneten Schalter wirkende Membrane angeordnet ist und mit einem Zulaufventil, das durch einen Steuerimpuls öffenbar und durch einen Steuerimpuls des Schalters schließbar ist, **dadurch gekennzeichnet**, daß der Überlaufkanal (12) ständig entleert wird, wobei in Strömungsrichtung (3) nach der mit einem Abstand (A) von der Überlaufkante (11) angebrachten Membrane (20) ein Strömungswiderstand angeordnet ist, der als Auslaufkanal (13), in den der Überlaufkanal (12) mündet und dessen Querschnitt kleiner als der Querschnitt des Überlaufkanals (12) ist, ausgebildet ist.

2. Vorrichtung nach Anspruch 1, dadurch gekennzeichnet, daß die Membrane (20) quer zur Strömungsrichtung (3) beaufschlagt wird.

3. Vorrichtung nach einem der Ansprüche 1 oder 2, dadurch gekennzeichnet, daß die Membrane (20) direkt von der einströmenden Flüssigkeit oder durch ein zwischen der einströmenden Flüssigkeit und ihr eingeschlossenes Luftpolster (5) beaufschlagt wird.

4. Vorrichtung nach einem der Ansprüche 1 bis 3, dadurch gekennzeichnet, daß die Membrane (20) direkt oder mittels eines Übertragungsglieds (30) auf den Schalter (4) einwirkt.

5. Vorrichtung nach einem der Ansprüche 1 bis 4, dadurch gekennzeichnet, daß die Membrane (20) mittels eines Deckels (40) zwischen diesem und der Wand (15) des Überlaufkanals (12) an ihrem umlaufenden Rand (21, 23) verklemmt ist.

6. Vorrichtung nach einem der Ansprüche 1 bis 5, dadurch gekennzeichnet, daß der Deckel (40) mittels Rasthaken (17) mit der Wand (15) lösbar verbunden ist.

7. Vorrichtung nach einem der Ansprüche 1 bis 6, dadurch gekennzeichnet, daß die Rasthaken (17) in entsprechende Öffnungen (41) eingreifen und diese federnd hintergreifen.

8. Vorrichtung nach einem der Ansprüche 1 bis 7, dadurch gekennzeichnet, daß die Rasthaken (17) an der Wand (15) und die Öffnungen (41) an dem Deckel (40) angeordnet sind.

9. Vorrichtung nach einem der Ansprüche 1 bis 8, dadurch gekennzeichnet, daß die Rasthaken (17) einstückig an der Wand (15) angeformt sind.

10. Vorrichtung nach einem der Ansprüche 1 bis 9, dadurch gekennzeichnet, daß die Membrane (20) die Öffnung (16) in der Wand (15) des Behälters (10) radial abdichtet.

11. Vorrichtung nach Anspruch 10, dadurch gekennzeichnet, daß der umlaufende Rand (21) in einen radial verlaufenden Teil (22) zwischen einem vorragenden Rand (42) des Deckels (40) und der Öffnung (16) in der Wand (15) angeordnet ist.

12. Vorrichtung nach einem der Ansprüche 1 bis 11, dadurch gekennzeichnet, daß der Deckel (40) Führungen (43, 44) für das Übertragungsglied (30) aufweist.

13. Vorrichtung nach einem der Ansprüche 1 bis 12, dadurch gekennzeichnet, daß das Übertragungsglied (30) eine äußere Führung (31) und eine zentrische Führung (32) aufweist.

14. Vorrichtung nach Anspruch 13, dadurch gekennzeichnet, daß die äußere Führung (31) eine mit einer äußeren Führung (43) des Deckels (40) zusammenwirkende umlaufende Fläche ist.

15. Vorrichtung nach Anspruch 13 oder 14, dadurch gekennzeichnet, daß die zentrische Führung (32) ein in einer zentrischen Bohrung (44) im Deckel (40) geführter Zentrierstift ist.

16. Vorrichtung nach Anspruch 15, dadurch gekennzeichnet, daß der Zentrierstift in einer zentrischen Bohrung (33) in der Stirnfläche des Übertragungsgliedes (30) formschlüssig aufgenommen ist.

## Claims

1. Device for the control of the inflow of liquid into a container, wherein the container displays an overflow edge which limits a filling surface level and leads to an overflow channel, at which a diaphragm is arranged, which acts on a switch arranged outside the overflow channel, and with an inflow valve which is openable by a control pulse and closable by a control pulse of the switch, characterised thereby, that the overflow channel (12) is constantly being emptied, wherein a flow resistance, which is constructed as outflow channel (13), into which the overflow channel (12) opens and the cross-section of which is smaller than the cross-section of the overflow channel (12), is arranged in flow direction (3) behind the diaphragm (20) arranged at a spacing (A) from the overflow edge (A).

2. Device according to claim 1, characterised thereby, that the diaphragm (20) is acted on transversely to the flow direction (3).

3. Device according to one of the claims 1 and 2, characterised thereby, that the diaphragm (20) is acted on directly by the inflowing liquid or by an air cushion (5) enclosed between it and the inflowing liquid.

4. Device according to one of the claims 1 to 3, characterised thereby, that the diaphragm (20) acts directly or by means of a transmission member (30) on the switch (4).

5. Device according to one of the claims 1 to 4, characterised thereby, that the diaphragm (20) is clamped at its encircling rim (21, 23) by means of a lid (40) between this and the wall (15) of the overflow channel (12).

6. Device according to one of the claims 1 to 5, characterised thereby, that the lid (40) is detachably connected with the wall (15) by means of detent hooks (17).

7. Device according to one of the claims 1 to 6, characterised thereby, that the detent hooks (17) engage into corresponding openings (41) and resiliently behind these.

8. Device according to one of the claims 1 to 7, characterised thereby, that the detent hooks (17) are arranged at the wall (15) and the openings (41) at the lid (40).

9. Device according to one of the claims 1 to 8, characterised thereby, that the detent hooks (17) are shaped on integrally at the wall (15).

10. Device according to one of the claims 1 to 9, characterised thereby, that the diaphragm (20) radially seals the opening (16) in the wall (15) of the container (10).

11. Device according to claim 10, characterised thereby, that the encircling rim (21) is arranged in a radially extending part (22) between a projecting rim (42) of the lid (40) and the opening (16) in the wall (15).

12. Device according to one of the claims 1 to 11, characterised thereby, that the lid (40) displays guides (43, 44) for the transmission member (30).

13. Device according to one of the claims 1 to 12, characterised thereby, that the transmission member (30) displays an outer guide (31) and a central guide (32).

14. Device according to claim 13, characterised thereby, that the outer guide (31) is a surface co-operating with an outer guide (43) of the lid (40).

15. Device according to claim 13 or 14, characterised thereby, that the central guide (32) is a centring pin guided in a central bore (44) in the lid (40).

16. Device according to claim 15, characterised thereby, that the centring pin is shape-lockingly received in a central bore (33) in the end face of the transmission member (30).

## Revendications

1. Dispositif pour commande l'arrivée de liquide dans un récipient, le récipient possédant un bord de trop-plein délimitant un niveau de remplissage et qui conduit à un canal de trop-plein, dans lequel est disposée une membrane agissant sur un interrupteur disposé à l'extérieur du canal de trop-plein, et comportant une soupape d'arrivée, qui peut être ouverte par une impulsion de commande et peut être fermée par une impulsion de commande de l'interrupteur, caractérisé en ce que le canal de trop-plein (12) est vidé en permanence, et dans la direction d'écoulement (3) est disposée, en aval de la membrane (20) située à une distance (A) du bord de trop-plein (11), une résistance d'écoulement, qui est agencée sous la forme d'un canal de sortie (13), dans lequel débouche le canal de trop-plein (12) et dont la section transversale est inférieure à la section transversale du canal de trop-plein (12).

2. Dispositif selon la revendication 1, caractérisé en ce que la membrane (20) est chargée transversalement par rapport à la direction d'écoulement (30).

3. Dispositif selon l'une des revendications 1 ou 2, caractérisé en ce que la membrane (20) est chargée directement par le liquide arrivant ou par un coussin d'air (5) inséré entre le liquide arrivant et la membrane.

4. Dispositif selon l'une des revendications 1 à 3, caractérisé en ce que la membrane (20) agit directement au moyen d'un élément de transmission (30) sur l'interrupteur (4).

5. Dispositif selon l'une des revendications 1 à 4, caractérisé en ce que la membrane (20) est bloquée, au niveau de son bord périphérique (21,23) au moyen d'un couvercle (40), entre ce dernier et la paroi (15) du canal de trop-plein (12).

6. Dispositif selon l'une des revendications 1 à 5, caractérisé en ce que le couvercle (40) est relié de façon amovible à la paroi (15) à l'aide de crochets d'encliquetage (17).

7. Dispositif selon l'une des revendications 1 à 6, caractérisé en ce que les crochets d'encliquetage (17) pénètrent dans des ouvertures correspondantes (41) et s'engagent élastiquement derrière ces dernières.

8. Dispositif selon l'une des revendications 1 à 7, caractérisé en ce que les crochets d'encliquetage (17) sont disposés sur la paroi (15) et les ouvertures (41) sont aménagées dans le couvercle (40).

9. Dispositif selon l'une des revendications 1 à 8, caractérisé en ce que les crochets d'encliquetage (17) sont formés d'un seul tenant sur la paroi (15).

10. Dispositif selon l'une des revendications 1 à 9, caractérisé en ce que la membrane (20) ferme radialement de façon étanche l'ouverture (16) aménagée dans la paroi (15) du récipient (10).

11. Dispositif selon la revendication 10, caractérisé en ce que le bord périphérique (21) est disposé dans une partie radiale (22) entre le bord saillant (42) du couvercle (40) et l'ouverture (16) aménagée dans la paroi (15).

12. Dispositif selon l'une des revendications 1 à 11, caractérisé en ce que le couvercle (40) comporte des guides (43,44) pour l'élément de transmission (30).

13. Dispositif selon l'une des revendications 1 à 12, caractérisé en ce que l'élément de transmission (30) possède un guide extérieur (31) et un guide central (32).

14. Dispositif selon la revendication 13, caractérisé en ce que le guide extérieur (31) est une surface périphérique, qui coopère avec un guide extérieur (43) du couvercle (40).

15. Dispositif selon la revendication 13 ou 14, caractérisé en ce que le guide central (32) est une tige de centrage guidée dans un perçage centré (44) aménagé dans le couvercle (40).

16. Dispositif selon la revendication 15, caractérisé en ce que la tige de centrage est logée selon une liaison par formes complémentaires dans un perçage centré (33) aménagé dans la face frontale de l'élément de transmission (30).
